Europäisches Patentamt

European Patent Office

Office européen des brevets

(11) Publication number: **0 277 021 B1**

(12) **EUROPEAN PATENT SPECIFICATION**

(45) Date of publication of patent specification: **26.08.92**   (51) Int. Cl.⁵: **B64C  27/30**, B64C 27/02

(21) Application number: **88300736.1**

(22) Date of filing: **28.01.88**

(54) **Improvements in aircraft.**

(30) Priority: **28.01.87 GB 8701886**

(43) Date of publication of application:
**03.08.88 Bulletin  88/31**

(45) Publication of the grant of the patent:
**26.08.92 Bulletin  92/35**

(84) Designated Contracting States:
**DE FR GB**

(56) References cited:
**FR-A- 948 001**
**US-A- 2 385 464**
**US-A- 3 404 852**
**US-A- 3 514 051**
**US-A- 4 059 247**

(73) Proprietor: **Lederman, Paul**
**18 Wheatley Close Hendon**
**London NW4 4LG(GB)**

(72) Inventor: **Lederman, Paul**
**18 Wheatley Close Hendon**
**London NW4 4LG(GB)**

(74) Representative: **Williams, John Francis et al**
**WILLIAMS, POWELL & ASSOCIATES 34**
**Tavistock Street**
**London WC2E 7PB(GB)**

Rank Xerox (UK) Business Services

## Description

This invention concerns improvements in aircraft designs, in particular related to the addition of rotor blades to a fixed wing aircraft.

Many attempts have been made to improve certain features of the performance of a convention aircraft by the use of a rotor. One of the main problems is that drag of the rotor becomes a severe disadvantage in normal flight.

A further problem is that if the rotor is in some way stowed in certain phases of flight, the usual drive and control linkages between the rotor blades and their axis are rendered extremely complex because of the need for changes in their relative positions. An example of the complexities necessary are illustrated in US 4059247 and 3404852. When the rotor axes in these cases are tilted backwards, the rotor blades are also moved from a position transverse to the axis to a position generally forming an extension of the axis. In the latter position the blades generate drag and provide no useful contribution to the flying characteristics of the aircraft.

Accordingly, the present invention proposes a fixed wing aircraft having propulsion means for forward flight and in addition rotor means located on its wings, characterised in that the rotor means are undriven and are positioned on the wings near their centre of lift, said rotor means being mounted on an axis which is tiltable from a substantially vertical position in which the rotor means rotate to provide lift, to a substantially horizontal position in which the rotor blades can be stowed parallel to the wing.

Such an aircraft has the advantages of both a normal fixed wing aircraft in normal flight and of rotor assistance during takeoff and landing, without incurring excessive drag. In addition, since the rotor blades remain generally transverse to their axis, their mechanical linkage remains relatively simple.

So that the invention shall be clearly understood, an exemplary embodiment will now be described with reference to the accompanying drawings, in which:

Fig. 1 shows a plan view of an otherwise conventional aircraft fitted with two rotors;

Fig. 2 shows a front view of the aircraft in Fig. 1;

A conventional fixed wing aircraft has a fuselage 10, a V-tailplane 11, wings 12 and podded jet engines 13. At the end of each wing 12 is a winglet 14 canted upwards at an angle of about 75° to the horizontal. At the upper part of each winglet 14 is a tiltable axis 15 which supports a pair of rotor blades 16. The blades 16 are not driven, so that the tilting of the axis is relatively straightforward, and the blades can adopt one of two effective positions.

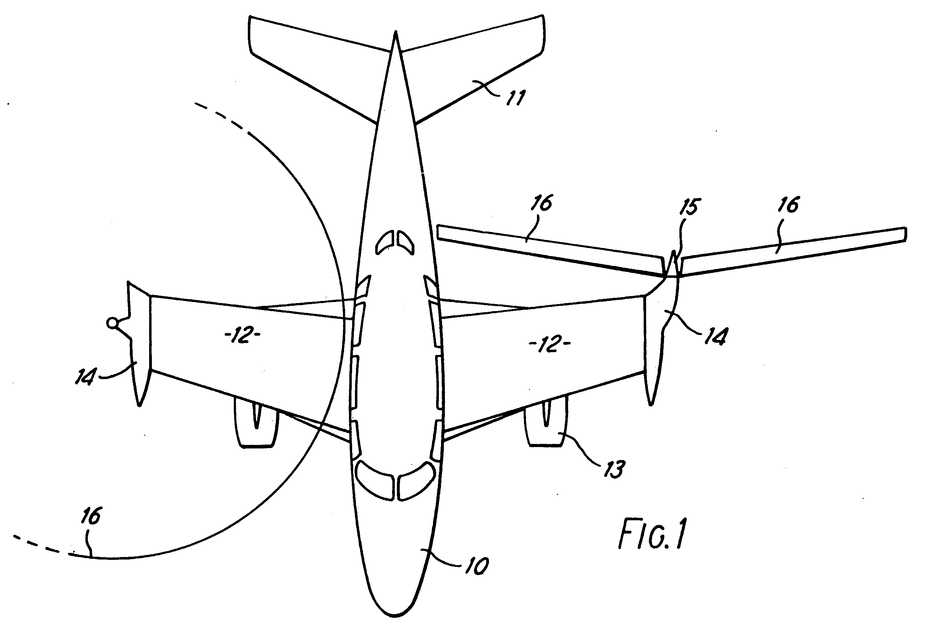

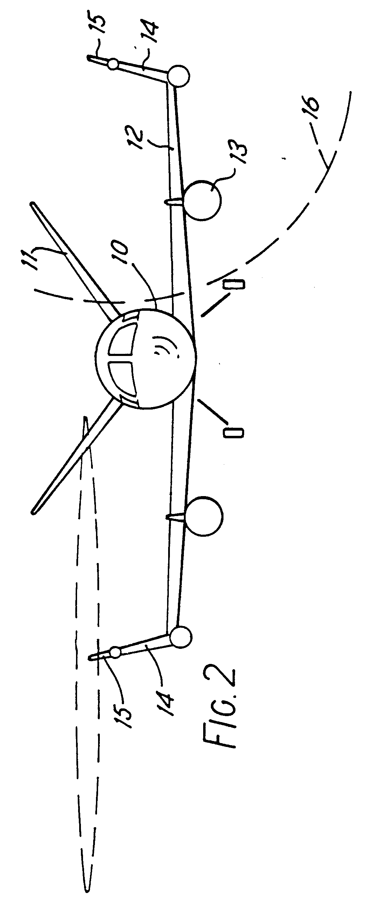

In the first, shown on the left in Figs 1 and 2, the axis 15 is nearly vertical but slightly rearwardly inclined, the position adopted before take off and in relatively slow forward motion. The blades of aerofoil section are symmetrical on the centre axis and are caused to adopt a slight angle of incidence such that they rotate in the manner of an autogyro rotor and thus provide considerable lift. The axes 15 are arranged to lie substantially at the same point fore-and-aft as the centre of lift of the wings themselves.

In the second position, shown on the right in Fig. 1, the axis 15 is tilted back so that it lies almost horizontal, but tilted very slightly further beyond the horizontal. The two blades 16 are brought to rest in a horizontal plane parallel to the wings and are fully feathered so that their respective leading edges face forwards. By this means the blades act as small fixed wings, with rotor coning angle becoming wing sweep, so that they can float efficiently in the high speed airflow. Useful extra lift is derived in forward flight. This position is adopted above a certain forward speed in order to reduce drag which would be quite excessive at high speeds if the rotor axis remains vertical or if blades rotate when axis is horizontal, or remain unfeathered when at rest.

There is in addition an intermediate condition, indicated on the right in Fig. 2, in which the rotor blades 16 are still rotating after being tilted back from their 'lift' position and before they are parked. However this state is sustained for the shortest possible time, until the blades can be made to "float", since they are otherwise passing through the direct exhaust flow of the engines.

As the axes tilt simultaneously in either sense under pilot control, the two feathering means are both actuated progressively in permanent synchronisation with the axes tilting means to ease pilot work load, and to provide basic stability and a smooth transition. By this means blade pitch is optimised throughout transition from/to lifting autogyro to/from fully feathered vertical rotor disc prior to being brought to/from rest in free floating condition.

It is believed that an aircraft equipped with rotors in this fashion can provide excellent lift at takeoff and landing, giving VSTOL characteristics for use in city and other restricted airport circumstances without comprising high speed cruise performance.

## Claims

1.  A fixed wing aircraft having propulsion means for forward flight and in addition rotor means (16) located on its wings (12) characterised in that the rotor means are undriven and are positioned on the wings near their centre of lift, said rotor means being mounted on an axis (15) which is tiltable from a substantially vertical position in which the rotor means rotate to provide lift, to a substantially horizontal position in which the rotor blades can be stowed parallel to the wing.

2. An aircraft as claimed in claim 1 wherein the rotor means are positioned at or near the wing tips.

3. An aircraft as claimed in claim 2, wherein the wing tips are tilted upwards (14) over the final portion of their length.

4. An aircraft as claimed in any preceding claim wherein the rotor means each comprise two blades, each having a length slightly less than the length of a wing.

5. An aircraft as claimed in claim 4, wherein each blade when stowed is feathered so that its lead edge faces forward.

**Patentansprüche**

1. Festflügelflugzeug mit Antriebsmitteln für den Vorwärtsflug und zusätzlichen, auf seinen Flügeln angeordneten Rotormitteln, **dadurch gekennzeichnet,** daß die Rotormittel antriebslos sind und an den Flügeln in der Nähe ihres Auftriebzentrums angeordnet sind, wobei die Rotoren jeweils auf einer Achse montiert sind, welche schwenkbar ist von einer im wesentlichen vertikalen Stellung, in welcher die Rotoren Auftrieb erzeugen, in eine im wesentlichen horizontale Stellung, in welcher die Rotorblätter ihre parallel zu den Flügeln gerichtete Ruheposition einnehmen können.

2. Flugzeug nach Anspruch 1 , **dadurch gekennzeichnet,** daß die Rotormittel an oder in der Nähe der Flügelenden angeordnet sind.

3. Flugzeug nach Anspruch 2 , **dadurch gekennzeichnet,** daß die Flügelenden über den Endbereich ihrer Länge aufwärts geneigt sind.

4. Flugzeug nach einem der vorangehenden Ansprüche, **dadurch gekennzeichnet,** daß die Rotormittel jeweils zwei Rotorblätter aufweisen, von denen jedes eine Länge aufweist, welche geringfügig kleiner ist als die Gesamtlänge eines Flügels.

5. Flugzeug nach Anspruch 4 , **dadurch ge-**

**kennzeichnet,** daß jedes Blatt in seiner Ruheposition so gestellt ist, daß seine Vorderkante nach vorne zeigt.

**Revendications**

1. Avion à aile fixe comportant des moyens de propulsion en vol horizontal et des rotors additionnels (16) disposés sur les ailes (12), caractérisé en ce que les rotors sont libres en rotation et placés sur les ailes à proximité de leur centre de sustentation, lesdits rotors étant montés sur un axe (15) basculable depuis une position sensiblement verticale dans laquelle les rotors tournent pour engendrer une poussée ascendante, jusque dans une position sensiblement horizontale dans laquelle les pales des rotors peuvent être mises en drapeau parallèlement à l'aile.

2. Avion suivant la revendication 1, dans lequel les rotors sont placés aux bouts des ailes ou du voisinage de ces bouts.

3. Avion suivant la revendication 2, dans lequel les bouts des ailes sont basculables vers le haut (14) sur la partie finale de leur longueur.

4. Avion suivant l'une des revendications précédentes, dans lequel chaque rotor comporte deux pales ayant chacune une longueur légèrement inférieure à celle d'une aile.

5. Avion suivant la revendication 4, dans lequel chaque pale, lorsqu'elle est en drapeau, est orientée de façon que son bord d'attaque soit tourné vers l'avant.

FIG.1

FIG. 2